Europäisches Patentamt

European Patent Office

Office européen des brevets

(11) Publication number: **0 161 880**
A2

(12) # EUROPEAN PATENT APPLICATION

(21) Application number: **85303156.5**

(22) Date of filing: **03.05.85**

(51) Int. Cl.⁴: **G 01 C 3/00**

(30) Priority: **16.05.84 GB 8412518**

(43) Date of publication of application: **21.11.85**
Bulletin 85/47

(84) Designated Contracting States: **DE FR GB**

(71) Applicant: **BRITAX (WINGARD) LIMITED, Chandler Road, Chichester Sussex, PO19 2UG (GB)**

(72) Inventor: **Cunningham, Douglas James, "Sambourne" 4 Church Close Dunton Bassett, Lutterworth Leicestershire LE16 5JY (GB)**
Inventor: **Perry, Robert James, 146 Tamworth Road Two Gates, Tamworth Staffordshire (GB)**

(74) Representative: **Hollinghurst, Antony, Britax Division (Patents) Kingsham Road, Chichester West Sussex PO19 2UG (GB)**

(54) **Distance measuring apparatus.**

(57) Distance measuring apparatus for determining when a point on a vehicle is at a predetermined distance from a point on an object relative to which the vehicle is movable, comprises a unit (16) having a first reflective surface mounted on the vehicle (10) on a line of sight from the point on the object (20) to the location of an eye (14) of an observer occupying the driver's seat in the vehicle (10) and a second reflective surface located adjacent to the first reflective surface and offset from said line of sight, the two reflective surfaces being oriented so that the image of the point on the object (20) reflected by the two reflective surfaces appears to be coincident with the object (20) when viewed along said line of sight.

EP 0 161 880 A2

"Distance Measuring Apparatus"

This invention relates to distance measuring apparatus for providing an indication when a point on a vehicle is at a predetermined distance from a point on an object relative to which the vehicle is movable.

It is frequently necessary to manoeuvre vehicles in confined spaces and misjudgment of the distance between the extremities of the vehicle and surrounding fixed objects are common causes of accidental damage. Such difficulties are particularly acute with certain models of car where the extremities of the car are not visible from the driver's seat. Such difficulties also arise when reversing large commercial vehicles where the distances to be judged may be relatively small in comparison to the distance between the driver's seat and the extremities of the vehicle.

According to the invention, distance measuring apparatus for determining when a point on a vehicle is at a predetermined distance from a point on an object relative to which the vehicle is movable, comprises a first reflective surface mounted on the vehicle on a line of sight from the point on the object to the location of an eye of an observer occupying the driver's seat in the vehicle and a second reflective surface located adjacent to the first reflective surface and offset from said line of sight, the two reflective surfaces being oriented so that the image of the point on the object reflected by the two reflective surfaces appears to be coincident with the object when viewed along said line of sight.

The first reflective surface may be constructed with a sufficiently high transmissivity for light from the object along the line of sight to pass therethrough while having sufficent reflectivity to reflect light from the second reflective surface along the line of sight towards the observer. Alternatively, the apparatus may be constructed so that the object can be viewed along the line of sight round the edge of the first reflective surface.

The two reflective surfaces may comprise first and second mirrors mounted in a housing. If desired, the housing may include means for adjusting the orientation of one mirror relative to the other so as to permit calibration of the apparatus after it has been installed on a vehicle.

In an alternative construction, which is applicable where post-installation calibration is not required, the two reflective surfaces may comprise the surfaces of a solid block of transparent material of refractive index such that total internal reflection takes place at each of the reflective surfaces as light passes from the object to the observer.

The apparatus may be mounted so that the first reflective surface can be viewed by the observer directly. Alternatively, particularly when the apparatus is to be used to measure a distance relative to the rear of the vehicle, the apparatus may be mounted so as to be viewed using a conventional vehicle rearview mirror.

Embodiments of the invention will now be described, by way of example, with reference to the accompanying drawings in which:

Figure 1 is a schematic side view of the front part of a motor car showing distance measuring apparatus in accordance with the invention used to determine clearance from the front of the vehicle;

Figure 2 is a ray diagram illustrating a first embodiment of the invention;

Figure 3 is an elevational view of the embodiment shown in Figure 1, as seen by the driver;

Figure 4 is a ray diagram of another embodiment of the invention;

Figure 5 is an elevational view showing the embodiment of Figure 4 as seen by the driver; and

Figure 6 is a schematic side view of the motor car shown in Figure 1, illustrating distance measuring apparatus in accordance with the invention for determining the clearance to the rear of the car.

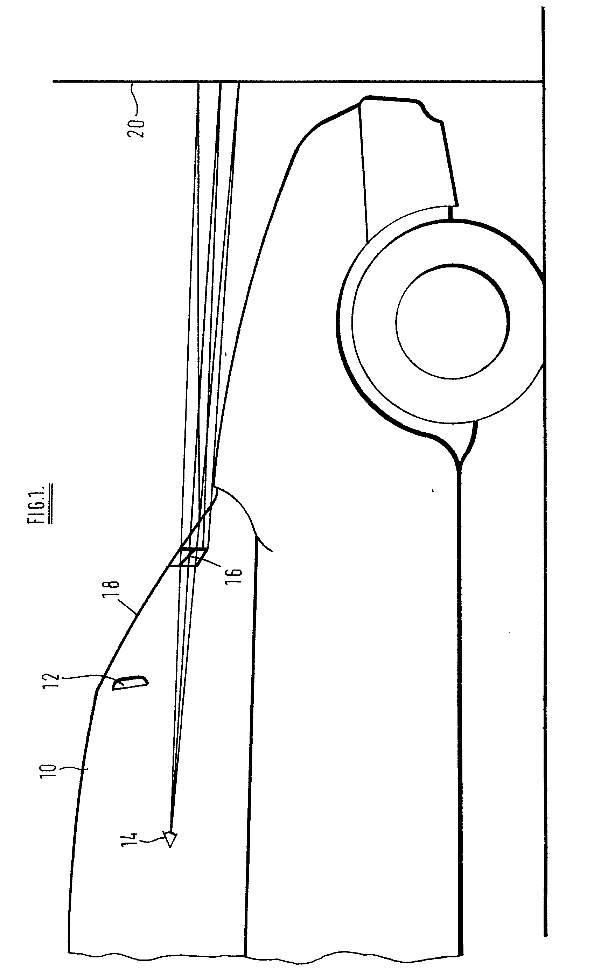

Figure 1 shows the front part of a motor car 10 having a conventional interior rearview mirror 12, the eye of the driver being shown schematically at 14. A distance measuring unit 16 in accordance with the invention is mounted in the vehicle at a convenient location just above the bottom of the windscreen 18 and arranged to determine when the distance of the front of the vehicle from a wall or other object 20 is at a predetermined value as illustrated.

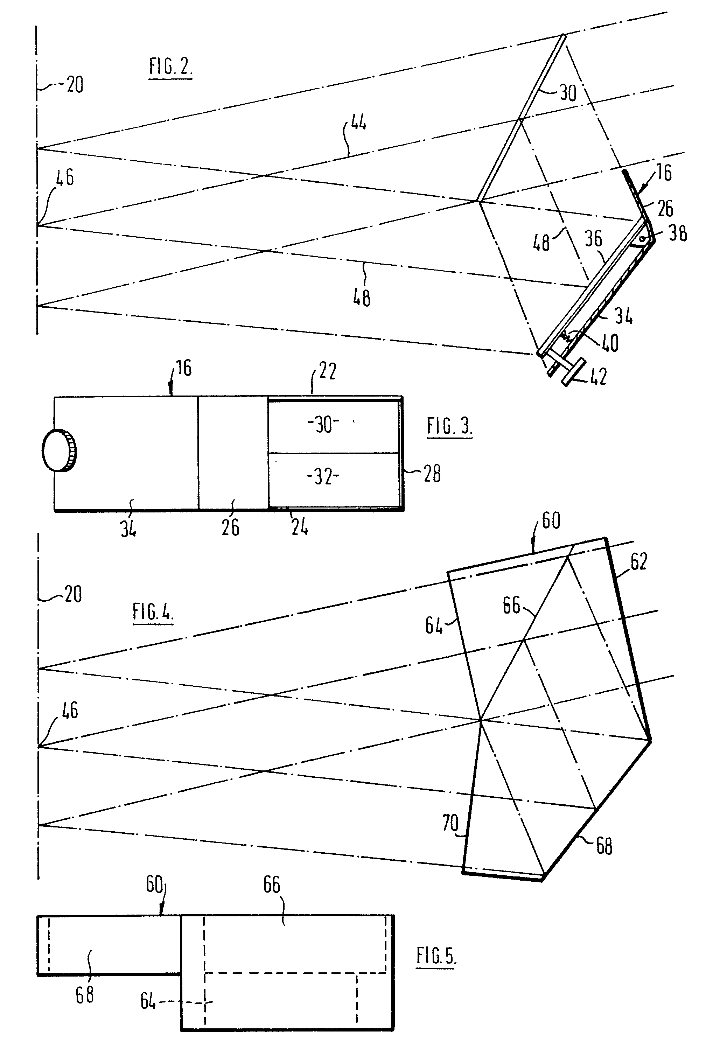

Turning now to Figures 2 and 3, the distance measuring unit 16 comprises a housing having mutually parallel walls 22 and 24 between which extends a front wall 26. An end wall 28 extends at about fifty degrees to the front wall 26 and carries a mirror 30 occupying most of one half while an window 32 occupies most of the other half. The mirror 30 has its reflective surface facing into the housing and can be viewed by an observer in the driving seat of the vehicle through an opening which extends between its frontmost edge and the front wall 26. It follows that the window 32 enables the observer to see straight through the housing.

At the opposite end to the wall 28, the housing is closed by a wall 34 on which a second mirror 36 is pivotally mounted for angular movement about an axis 38 perpendicular to the plane of the drawing comprising Figure 2. At the opposite end to the pivot axis 38, a tension spring 40 holds the mirror in engagement with an adjustment screw 42 which extends through a threaded hole in the end wall 34 and permits adjustment of the orientation of the second mirror 36 relative to the first mirror 30.

As can best be seen from Figure 2, a light ray 44 from a point 46 on the wall 20 passes through the window 32 directly to the eye 14 of the observer (Figure 1). On the other hand, a ray 48 from the point 46 is incident on the second mirror 36 whence it is reflected on to the first mirror 30. The orientation of the second mirror 36 is adjusted so that the ray 48 reflected by the first mirror 30 is superimposed on the direct ray 44 when the distance between the unit 16 and the wall 20 is at a chosen value. As can be seen in Figure 1, the unit 16 is oriented with the walls 22 and 24 vertical and the mirror 30 above the mirror 36. In this orientation, horizontal markings on the wall 20, as viewed directly through the window 32, appear to be below the same markings viewed via the mirrors 30 and 36 when the distance between the front of the car 10 and the wall 20 exceeds the predetermined value, the markings moving into alignment with one another as the vehicle approaches the wall.

It will be evident that the apparatus would work in other orientations but the orientation illustrated is preferred because the mortar courses in brick walls then provide convenient reference markings.

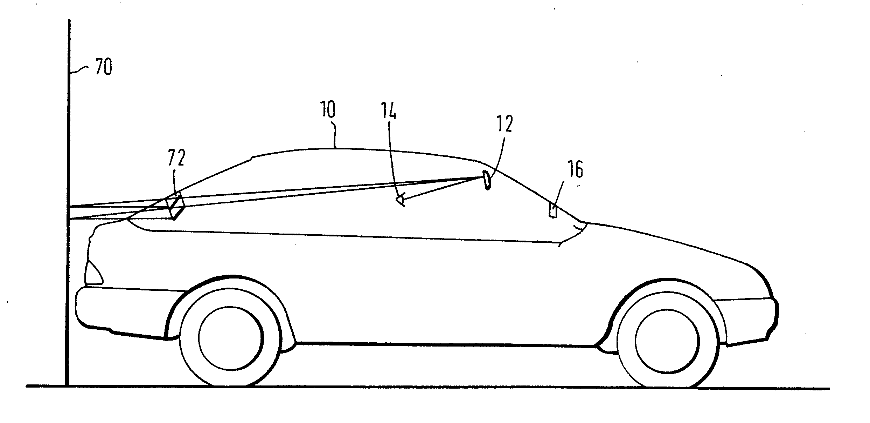

Figures 4 and 5 illustrate an alternative embodiment of the invention for use when adjustment of the predetermined distance is not required. The two mirrors 30 and 36 are replaced by a block 60 of transparent material such as perspex or glass. The block 60 has a face 62 which is perpendicular to the direct line of sight between the observers eye 14 and a point 46 on the wall 20. Instead of the window 32, one half of the block 60 has a second face 64 parallel to the face 62 so that light from the point 46 incident on the face 64 is transmitted without deflection. The other half of the block 60 has a face 66 in a corresponding position to the mirror 30 and a face 68 in a position corresponding to the mirror 36. Opposite the face 68, the block has a face 70 oriented perpendicular to the path of light from the point 46 to the face 68. In use, total internal reflection takes place at the faces 66 and 68 and operation is otherwise similar to that described with reference to Figures 2 and 3.

Figure 6 illustrates the use of the invention to detect clearance between the rear of the vehicle and a wall 70. A unit 72, which may either be similar to the unit 16 illustrated in Figures 2 and 3 or similar to the unit 60 illustrated in Figures 4 and 5, is mounted in a position close to the bottom of the vehicle rear window so that it can be viewed using the vehicle interior rearview mirror 12. Operation is as described above.

When the invention is applied to a commercial vehicle, a unit such as the unit 16 is mounted on the side of the vehicle, near the rear in a position so that it can be viewed using the vehicle's exterior rearview mirror.

CLAIMS

1.      Distance measuring apparatus for determining when a point on a vehicle is at a predetermined distance from a point on an object relative to which the vehicle is movable, characterised by a first reflective surface (30, 66) mounted on the vehicle (10) on a line of sight from the point on the object (20, 70) to the location of an eye (14) of an observer occupying the driver's seat in the vehicle (10) and a second reflective surface (36, 68) located adjacent to the first reflective surface (30, 66) and offset from said line of sight, the two reflective surfaces (14, 30; 66, 68) being oriented so that the image of the point on the object (20, 70) reflected by the two reflective surfaces appears to be coincident with the object (20, 70) when viewed along said line of sight.

2.      Distance measuring apparatus according to claim 1, wherein the apparatus is constructed so that the object can be viewed along the line of sight round the edge of the first reflective surface (30, 66).

3.      Distance measuring apparatus according to claim 1, wherein the first reflective surface (30) is constructed with a sufficiently high transmissivity for light from the object along the line of sight to pass therethrough while having sufficent reflectivity to reflect light from the second reflective surface (36) along the line of sight towards the observer.

4.      Distance measuring apparatus according to claim 1, 2 or 3, wherein the two reflective surfaces comprise first and second mirrors (30, 66) mounted in a housing.

5.      Distance measuring apparatus according to claim 4, wherein the housing includes means (40, 42) for adjusting the orientation of one mirror (36) relative to the other mirror (30) so as to permit calibration of the apparatus after it has been installed on a vehicle.

6.      Distance measuring apparatus according to claim 1 or 2, wherein the two reflective surfaces may comprise the surfaces (66, 68) of a solid block (60) of transparent material of refractive index such that total internal reflection takes place at each of the

0161880

- 6 -

reflective surfaces (66, 68) s light passes from the object  to  the observer.

7.      Distance measuring apparatus according to any of claims 1 to 6, adapted to be is mounted  so  that  the  first reflective surface (30, 66) can be viewed by the observer directly.

8.      Distance measuring apparatus according to any of claims 1 to 6, adapted to be mounted so  as  to  be  viewed using a conventional vehicle rearview mirror (12).

FIG.1.

0161880

FIG. 2.

FIG. 3.

FIG. 4.

FIG. 5.

0161880

3/3